# EUROPÄISCHE PATENTSCHRIFT

(11) **EP 2 386 381 B1**
(45) Veröffentlichungstag und Bekanntmachung des Hinweises auf die Patenterteilung: **10.07.2013**
(21) Anmeldenummer: 11165238.4
(22) Anmeldetag: 09.05.2011
(51) Int. Cl.: B23P 19/00, B23Q 7/10

(54) **Ausbrechstiftmagazin**
Stripping cartridge
Cartouche de crayon d'enfoncement

(30) Priorität: 10.05.2010 DE 102010020127
(43) Veröffentlichungstag der Anmeldung: 16.11.2011
(73) Patentinhaber: silcoplan engineering GmbH, 78359 Orsingen-Nenzingen (DE)
(72) Erfinder: Stroppel, Karl-Anton, 78333 Stockach-Wahlwies (DE)
(74) Vertreter: Wagner, Kilian

(56) Entgegenhaltungen:
- EP-A1- 0 424 050
- DE-A1- 3 834 096
- DE-A1- 10 023 896
- DE-U1-202008 012 789

## Beschreibung

Die vorliegende Erfindung betrifft ein Ausbrechstiftmagazin zum Zuführen von Ausbrechstiften zu einem Einsetzkopf gemäß Anspruch 1. Ferner betrifft die Erfindung eine Vorrichtung zum aufeinanderfolgenden Einsetzen einer Mehrzahl von Ausbrechstiften mit einem solchen Ausbrechstiftmagazin gemäß Anspruch 9.

Im vorliegenden technischen Gebiet der Stanz- und Ausbrechtechnologie werden Vorrichtungen benutzt, um automatisiert und damit in dem Bestreben, manuellen Einsatz zu vermindern, sogenannte Ausbrechstifte an vorbestimmte Positionen eines (typischerweise als großflächige Platte realisierten) Ausbrechwerkzeugs einzubringen. Eine bekannte Vorrichtung ist in der DE 100 23 896 A1 beschrieben. Bereits dieser Stand der Technik zeigt, dass es neben Effizienz im Herstellen derartiger Ausbrechwerkzeuge, insbesondere auch bestimmt durch die Bestückungszyklen und damit verbundene Taktzeiten, auch auf Flexibilität ankommt, denn häufig verlangt ein zu bestückendes Ausbrechwerkzeug nach einer Mehrzahl von zu positionierenden Ausbrechstifttypen, etwa bestimmt durch die Ausbrecherfordernisse an einer jeweiligen Position am Werkzeug.

Bei der bekannten Vorrichtung ist ein relativ zum zu bestückenden Ausbrechwerkzeug verstellbarer Einsetzkopf vorgesehen, mit welchem die diesem zugeführten Ausbrechstifte mittels eines Stößels kraftbeaufschlagt und so definiert in das Ausbrechwerkzeug an die angefahrene Position eingesetzt werden. Dem verstellbaren Einsetzkopf ist ein stationäres Ausbrechstiftmagazin zugeordnet, weiches über einen flexiblen Schusskanal mit dem Einsetzkopf verbunden ist, sodass die Ausbrechstifte nacheinander pneumatisch beschleunigt zugeführt werden können. Problematisch bei aus der Praxis bekannten Ausbrechstiftmagazinen ist, dass diese individuell für die zu verwendenden Stifttypen konzipiert werden müssen und daher vergleichsweise in der Handhabung bzw. auf die Verwendung bestimmter Ausbrechstifttypen beschränkt sind. Darüber hinaus ist vergleichsweise viel Handarbeit bei der Vereinzelung der Ausbrechstifte notwendig. Auch ist die Zuführgeschwindigkeit, mit der unterschiedliche Ausbrechstifte im Ausbrechstiftmagazin transportier bar sind, verbesserungsbedürftig.

Ausgehend von dem zuvor geschilderten Stand der Technik liegt der Erfindung die Aufgabe zugrunde, ein im Hinblick auf einen einfachen Aufbau, eine hohe Zuführgeschwindigkeit der Ausbrechstifte zum Schusskanal sowie ein störungsunempfindliches Vereinzeln von Ausbrechstiften optimiertes Ausbrechstiftmagazin anzugeben. Insbesondere sollen die Vorratskammern des Ausbrechstiftmagazins individuell befüllbar sein. Ferner besteht die Aufgabe darin, eine Vorrichtung zum aufeinanderfolgenden Einsetzen von Ausbrechstiften mit einem entsprechend optimierten Ausbrechstiftmagazin anzugeben.

Diese Aufgabe wird hinsichtlich des Ausbrechstiftmagazines mit den Merkmalen des Anspruchs 1 bzw. durch die Verwendung eines solchen Magazins mit den Merkmalen des Anspruchs 8 gelöst. Hinsichtlich der Vorrichtung zum Einsetzen von Ausbrechstiften wird die Aufgabe mit den Merkmalen des Anspruchs 9 gelöst.

Vorteilhafte Weiterbildungen der Erfindung sind in den Unteransprüchen angegeben.

Der Erfindung liegt der Gedanke zugrunde, im Magazin mehrere rotierbare und axial nebeneinander angeordnete Transporteinheiten für Ausbrechstifte vorzusehen, wobei die Transporteinheiten bevorzugt zum Vereinzeln und Transportieren von aus zugeordneten Vorratskammern zu entnehmenden Ausbrechstiften zu einem gemeinsamen Schusskanal ausgebildet sind. Anders ausgedrückt ist jeder individuell bestückbaren Vorratskammer also eine Transporteinheit zugeordnet, wobei durch das axiale nebeneinander Anordnen der rotierbaren Transporteinheiten sichergestellt wird, dass die Ausbrechstifte der unterschiedlichen Vorratskammern an unterschiedlichen Axialpositionen des gemeinsamen Schusskanals zugeführt werden. Dem Schusskanal sind wiederum (Beschleunigungs-)impulsgebermittel zugeordnet, mit denen der jeweils in den Schusskanal mittels einer der Transporteinheiten überführte Ausbrechstift in Richtung auf den Einsetzkopf beschleunigbar ist, um den Ausbrechstift auf diese Weise dem Einsetzkopf zuzuführen, wo er bevorzugt, beispielsweise mittels eines Stößels kraftbeaufschlagt wird und so in ein Ausbrechwerkzeug eingesetzt wird. Der beschriebene Aufbau eines nach dem Konzept der Erfindung ausgebildeten Ausbrechstiftmagazins ist überraschend einfach und robust und garantiert eine hohe Zuführgeschwindigkeit der Ausbrechstifte aus den Vorratskammern in den gemeinsamen Schusskanal. Die Zuordnung jeweils einer Transporteinheit zu jeweils einer Vorratskammer ermöglicht es, die Transporteinheit zum Transportieren der Ausbrechstifte in den gemeinsamen Schusskanal in ausschließlich eine Umfangsrichtung zu rotieren. Dabei ist pro Ausbrechstift bzw. pro Zuführvorgang nur ein Rotationstakt in eine Umfangsrichtung notwendig. Zudem ist das erfindungsgemäße Ausbrechstiftmagazin störungsunanfällig, insbesondere dann, wenn die Transporteinheiten gleichzeitig zum Vereinzeln der in den Vorratskammern aufgenommenen, vorzugsweise parallel zum Schusskanal ausgerichteten, Ausbrechstifte ausgebildet sind. Besonders bevorzugt ist eine Ausführungsvariante, bei der nicht nur die Transporteinheiten axial benachbart und vorzugsweise parallel zur Längserstreckung eines gemeinsamen Schusskanalabschnittes angeordnet sind, sondern auch die Vorratskammern zur Aufnahme der Ausbrechstifte.

Im Hinblick auf die konkrete Ausbildung der Impulsgebermittel zum Beaufschlagen des jeweils im Schusskanal befindlichen Ausbrechstiftes gibt es unterschiedliche Möglichkeiten. Bevorzugt handelt es sich um pneumatische Impulsgebermittel mittels denen der Ausbrechstift mittels eines Gasdruckimpulses, insbesondere eines Luftdruckimpulses, beschleunigbar ist, wobei auch andere Ausführungsvarianten, beispielsweise mittels eines Stößels, also eine mechanische Impulsweitergabe realisierbar sind.

In Weiterbildung der Erfindung ist mit Vorteil vorgesehen, dass die Transporteinheiten nicht nur zum Transportieren der Ausbrechstifte aus den Magazinen zum Schusskanal ausgebildet sind, sondern dass die Transporteinheiten jeweils einen Axialabschnitt des Schusskanals bilden. Dies kann beispielsweise dadurch realisiert werden, dass die Transporteinheiten jeweils mindestens eine Transportkammer zur Aufnahme eines Ausbrechstiftes aufweisen, wobei die Transportkammer nach dem Transportieren des Ausbrechstiftes einen Axialabschnitt des Schusskanals bildet. Diese bevorzugte Ausführungsvariante ermöglicht es, auf separate Verschlussmittel zum Verschließen des Schusskanals nach dem Einlegen eines Ausbrechstiftes zu verzichten, weil diese Verschlussmittel unmittelbar von den Transporteinheiten selbst gebildet sind. Der von jeweils einer Transporteinheit gebildete Axialabschnitt kann umfangsgeschlossen ausgebildet sein, also den Schusskanal in dem entsprechenden Axialabschnitt vollständig ausbilden. Bevorzugt handelt es sich bei dem Axialabschnitt jedoch um lediglich einen Umfangsabschnitt des Schusskanals, sodass ein korrespondierender Umfangsabschnitt des Schusskanals vorzusehen ist, mit dem die Transporteinheit, genauer der den Schusskanal mitbildende Abschnitt, zusammenwirkt, wobei dieser korrespondierende Umfangsabschnitt bevorzugt ortsfest angeordnet ist. Ganz besonders bevorzugt handelt es sich bei dem jeweils von einer Transporteinheit gebildeten Umfangsabschnitt um einen unteren Umfangsabschnitt des Schusskanals. Sämtliche von den unterschiedlichen Transporteinheiten gebildeten Axialabschnitte sind, wie die Transporteinheiten, bevorzugt axial benachbart angeordnet, d.h. fluchten in axialer Richtung und bilden gemeinsam eine Teilstrecke, vorzugsweise eine Startstrecke, des gemeinsamen Schusskanals.

Ganz besonders zweckmäßig ist eine Ausführungsvariante, bei der die Transporteinheiten jeweils ein mehrere in Umfangsrichtung nebeneinander angeordnete Axialnuten aufweisendes Ritzel umfassen, wobei die Ritzel um eine gemeinsame gedachte Drehachse unabhängig voneinander rotierbar bzw. antreibbar sind. Die Anzahl und Umfangserstreckung jeder Axialnut bestimmt dann den Drehwinkel bei einem Zuführvorgang. Eine derartige Ausführungsvariante ist konstruktiv bestechend einfach und weist zudem den Vorteil auf, dass in diesem Fall die Transporteinheiten nicht nur zum Transportieren der Ausbrechstifte zum Schusskanal und Abdichten desselben, sondern zusätzlich zum Vereinzeln der in den Vorratskammern aufgenommenen Ausbrechstifte dienen, da die Ausbrechstifte, vorzugsweise quer zur Längserstreckung des Schusskanals in die jeweilige Axialnut hereinrollen können und zwar pro Axialnut ein einziger Ausbrechstift und dann mittels des Ritzels in eine einzige Umfangsrichtung zum Schusskanal transportiert werden können. Ein darauffolgendes Zurückverdrehen der entsprechenden Transporteinheit ist nicht notwendig. Bevorzugt sind die Axialnuten, die einen Axialabschnitt und zwar jeweils einen Umfangsabschnitt des Schusskanals bilden können im Querschnitt, zumindest näherungsweise teilkreisförmig, insbesondere halbkreisförmig.

Auch ist eine Ausführungsform realisierbar, bei der die Nutwände der Axialnut der Transporteinheit derart auf die zu transportierenden Ausbrechstifte abgestimmt sind, dass der jeweils in einer Axialnut aufgenommene Ausbrechstift die Axialnut in radialer Richtung nicht überragt. Bei einer derartigen Ausführungsform der Transporteinheit kann der statisch angeordnete Schusskanalabschnitt, mit dem die jeweilige Axialnut zusammenwirkt, eben ausgebildet sein und muss nicht zwingend die Rundung des Ausbrechstiftes aufnehmen bzw. abbilden. Insbesondere bei einer zuvor beschriebenen Ausführungsvariante ist es möglich, die Axialnuten der Transporteinheit im Querschnitt U-förmig auszubilden, wobei die beiden Schenkel des Us von den, vorzugsweise zumindest in einem oberen Abschnitt, parallel zueinander verlaufenden Nutwänden gebildet sind.

Zum rotatorischen Antreiben der Transporteinheiten in eine gemeinsame, vorzugsweise ausschließlich eine, Umfangsrichtung gibt es unterschiedliche Möglichkeiten. So ist es denkbar, jeder Transporteinheit einen Rotationsmotor, insbesondere einen elektrischen Schrittmotor zuzuordnen. Eine derartige Ausführungsform wäre jedoch nur äußerst kostenintensiv realisierbar und würde vergleichsweise viel Bauraum benötigen. Gemäß einer bevorzugten Ausführungsvariante des Ausbrechstiftmagazins ist daher vorgesehen, zum rotatorischen Antreiben der Transporteinheiten Linearantriebe vorzusehen, wobei bevorzugt jeder Transporteinheit ein eigener Linearantrieb, insbesondere ein pneumatischer Antrieb, noch weiter bevorzugt ein Kolbenzylinderantrieb zugeordnet ist. Noch weiter bevorzugt ist es, wenn die den Transporteinheiten zugeordneten Linearantriebe axial nebeneinander, vorzugsweise unterhalb der entsprechenden Vorratskammern, angeordnet sind.

Wie zuvor bereits angedeutet, ermöglicht es das nach dem Konzept der Erfindung ausgebildete Ausbrechstiftmagazin unterschiedliche Ausbrechstifte mit jeweils nur einem Drehtakt um einen von der Anzahl der Axialnuten bestimmten Drehwinkel dem Schusskanal zuzuführen. Ein Verdrehen der Transporteinheiten in einander entgegengesetzte Umfangsrichtung ist nicht notwendig, kann jedoch bei Bedarf auch realisiert werden. Um bei den bevorzugt zum Einsatz kommenden Linearantrieben ein Zurückverstellen in eine Ausgangsposition zu ermöglichen, ohne dabei die Transporteinheiten entgegen der ursprünglichen Transportrichtung zu verdrehen, ist in Weiterbildung der Erfindung mit Vorteil vorgesehen, dass die Linearantriebe zwischen einer Parkposition und einer Eingriffsposition verstellbar sind, wobei die Linearantriebe jeweils in der Eingriffsposition, vorzugsweise formschlüssig mit der zugehörigen Transporteinheit zusammenwirken. In der Parkposition und/oder auf dem Weg von der Parkposition in die Eingriffsposition und/oder auf dem Weg von der Eingriffsposition in die Parkposition können die Linearantriebe jeweils in ihrer lineare Ausgangsposition zurückverstellt werden, aus der heraus sie beim nächsten Ansteuertakt die zugehörige Transporteinheit rotatorisch durch Linearvertellen antreiben. Ganz besonders bevorzugt ist es, wenn jedem Linearantrieb als Eingriffsmittel zum Zusammenwirken mit der zugehörigen Transporteinheit eine Zahnstange zugeordnet ist, die besonders bevorzugt im Falle der Ausbildung der Transporteinheiten als Ritzel zum Einsatz kommt, da die jeweils nicht mit einem Ausbrechstift beladenen Axialnuten formschlüssig zum Zusammenwirken mit der Zahnstange dienen können. Es ist auch alternativ eine, insbesondere ausschließlich, reibschlüssige Wirkverbindung zwischen den Eingriffsmitteln und den Transportmitteln realisierbar. Konstruktiv besonders bevorzugt ist es, wenn die Linearantriebe, insbesondere in einem von einem Eingriffsbereich mit der jeweils zugeordneten Transporteinheit verschwenkbar gelagert sind, sodass die Linearantriebe, insbesondere pneumatisch zwischen ihrer Parkposition, in der die Linearantriebe außer Eingriff mit der zugehörigen Transporteinheit sind und der Eingriffsposition verschwenkt werden können.

Im Hinblick auf ein vereinfachtes Beladen der Vorratskammer und im Hinblick auf die Minimierung von Handarbeit zum Vereinzeln der Ausbrechstifte ist in Weiterbildung der Erfindung mit Vorteil vorgesehen, dass die Vorratskammern jeweils eine in Richtung Transporteinheit geneigte Bodenfläche aufweisen, sodass die Ausbrechstifte automatisch in Richtung der zugehörigen Transporteinheit rollen können, welche noch weiter bevorzugt gleichzeitig als Vereinzelungseinheit ausgebildet ist, insbesondere als Vereinzelungsritzel mit mehreren, insbesondre gleichmäßig über den Umfang verteilt angeordneten, Axialnuten zur jeweiligen Aufnahme eines Ritzels.

Wie eingangs angedeutet, ermöglicht das nach dem Konzept der Erfindung ausgebildete Ausbrechstiftmagazin eine individuelle Beladung. Sind beispielsweise zwei Vorratskammern vorgesehen, so können mit dem Magazin für bestimmte Anwendungszwecke zwei unterschiedliche Ausbrechstifte dem Schusskanal und damit dem Einsetzkopf zugeführt werden, wobei eine geeignete Steuerung dafür Sorge trägt, dass jeweils die korrekte Transporteinheit rotatorisch in Umfangsrichtung bewegt wird. Werden für ein nachfolgendes Bestückungsprojekt lediglich Ausbrechstifte einer Sorte benötigt, so können beide Vorratsmagazine mit identischen Ausbrechstiften bestückt werden, wodurch sich die Standzeit einer mit einem nach dem Konzept der Erfindung ausgebildeten Magazin ausgestatteten Vorrichtung erhöht. Im Falle des Vorsehens von vier Vorratskammern können maximal gleichzeitig vier unterschiedliche Ausbrechstifte eingesetzt werden. Auch ist es möglich jeweils zwei Vorratskammern mit identischen Ausbrechstiften zu bestücken, oder zwei Vorratskammern mit identischen Ausbrechstiften und zwei weitere Vorratskammern mit davon unterschiedlichen Ausbrechstiften. Insgesamt wird also ein äußerst flexibler Einsatz des Ausbrechstiftmagazins sichergestellt.

Die Erfindung führt auch auf die Verwendung eines nach dem Konzept der Erfindung ausgebildeten Ausbrechstiftmagazins zum Zuführen von Ausbrechstiften zu einem Einsetzkopf einer Vorrichtung zum Einsetzen einer Mehrzahl von Ausbrechstiften in ein plattenförmiges Ausbrechwerkzeug.

Zudem führt die Erfindung auch auf eine Vorrichtung zum aufeinanderfolgenden Einsetzen einer Mehrzahl von Ausbrechstiften in ein plattenförmiges Ausbrechwerkzeug mit einem zum Einpressen eines Ausbrechstiftes durch Kraftbeaufschlagung ausgebildeten Einsetzkopf, der über einen abschnittsweise flexiblen Schusskanal mit einem nach dem Konzept der Erfindung ausgebildeten Ausbrechstiftmagazin verbunden ist. Im Hinblick auf vorteilhafte Möglichkeiten zur Ausbildung des Einsetzkopfes und/oder der Vorrichtung wird auf die DE 20 2008 012 789 der Anmelderin verwiesen.

Ganz besonders zweckmäßig ist es, wenn die Vorrichtung mehrere nach dem Konzept der Erfindung ausgebildete Ausbrechstiftmagazine umfasst, die als Module axial nebeneinander angeordnet sind, wobei die Transporteinheiten der mehreren Ausbrechstiftmagazine bevorzugt jeweils einen Axialabschnitt eines gemeinsamen, sich über die Ausbrechstiftmagazine erstreckenden Schusskanals bilden. Bevorzugt sind den Ausbrechstiftmagazinen gemeinsame (insbesondere ein einziges) Impulsgebermittel zugeordnet.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig.1 bis 3: drei unterschiedliche perspektivische Ansichten eines Ausbrechstiftmagazins,
- Fig. 4: eine schematische Darstellung einer Vorrichtung zum Einsetzen von Ausbrechstiften mit einem Ausbrechstiftmagazin, und
- Fig. 5: eine schematische Darstellung einer alternativen Ausführungsvariante des Schusskanals.

In den Figuren sind gleiche Elemente und Elemente mit der gleichen Funktion mit den gleichen Bezugszeichen gekennzeichnet.

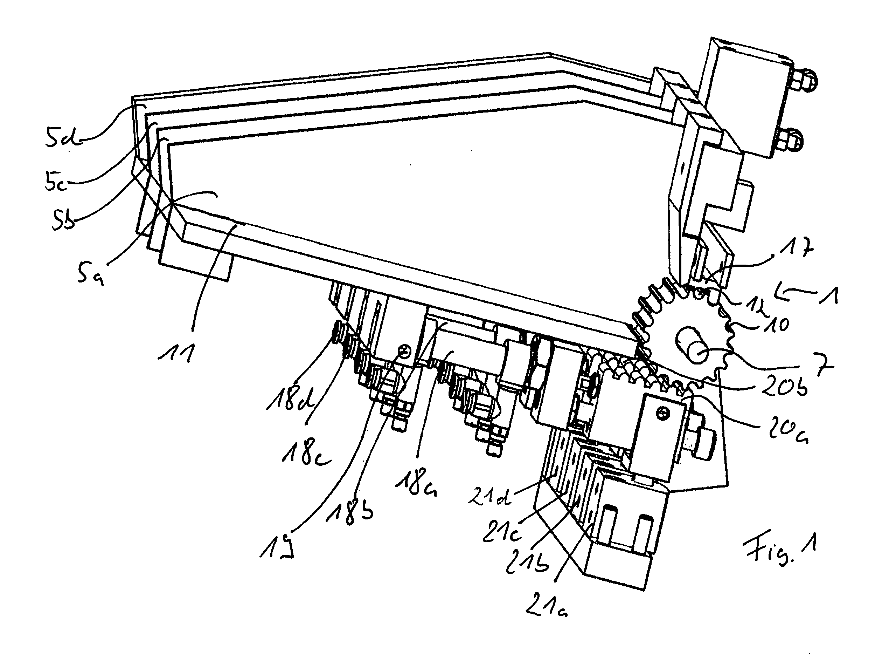

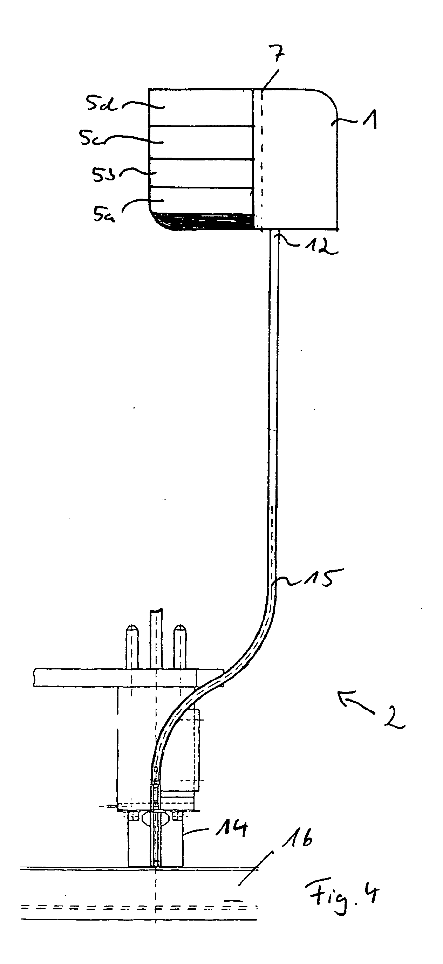

In den Fig. 1 bis 3 ist ein Ausbrechstiftmagazin 1 in unterschiedlichen Ansichten und Detaillierungsgraden gezeigt, wohingegen das in einer Vorrichtung 2 zum Einsetzen von Ausbrechstiften integrierte Ausbrechstiftmagazin 1 in der Darstellung gemäß Fig. 4 lediglich schematisch dargestellt ist.

Das Ausbrechstiftmagazin 1 umfasst in dem gezeigten Ausführungsbeispiel insgesamt vier in einer Axialrichtung 3 nebeneinander angeordnete, über Zwischenwände 4 voneinander getrennte und in dem gezeigten Ausführungsbeispiel oben sowie hinten offene Vorratskammern, nämlich eine erste Vorratskammer 5a, eine zweite Vorratskammer 5b, eine dritte Vorratskammer 5c sowie eine vierte Vorratskammer 5d, wobei die Anzahl der Vorratskammern von Ausführung zu Ausführung variieren kann. Bevorzugt werden Ausbrechstiftmagazine als Module angeboten, sodass die gewünschte Anzahl an Vorratskammern durch axial benachbartes Anordnen mehrerer Ausbrechstiftmagazine 1 erzielt werden kann. Als Minimalforderung sind insgesamt zwei Vorratskammern vorhanden. Jeder Vorratskammer 5a bis 5d ist eine rotierbare Transporteinheit 6a bis 6d zugeordnet, wobei die Transporteinheiten 6a bis 6d um eine gemeinsame gedachte Drehachse 7 rotierbar sind. Bei dem Ausführungsbeispieil ist eine durchgehende, zylinderstabförmige Achse vorgesehen, auf der die jeweils ein Ritzel 9a bis 9d umfassenden Transporteinheiten 6a bis 6d rotierbar angeordnet sind. Selbstverständlich können auch mehrere axial benachbarte Achsen die gemeinsame gedachte Drehachse 7 bilden. Jedes Ritzel 9a bis 9d weist eine Mehrzahl von in Umfangsrichtung nebeneinander angeordneten Axialnuten 10 auf, wobei die Axialnuten 10 im Querschnitt zumindest näherungsweise teilkreisförmig ausgebildet sind, hier halbkreisförmig um in jeder Axialnut 10 einen Ausbrechstift (nicht dargestellt) aufnehmen zu können. Die zum Einsatz kommenden Ausbrechstifte können beispielsweise wie in der DE 20 2010 004 552 beschrieben ausgebildet sein.

Jede Vorratskammer 5a bis 5d weist eine Bodenfläche 11 auf, die in Richtung der zugehörigen Transporteinheit 6a bis 6d geneigt ist, sodass die parallel zur Drehachse 7 ausgerichteten, in der jeweiligen Vorratskammer 5a bis 5d befindlichen Ausbrechstifte in Richtung Transporteinheit 6a bis 6d rollen können, welche die Ausbrechstifte vereinzelt, indem die jeweilige Transporteinheit 6a bis 6d pro Axialnut 10 einen Ausbrechstift in Umfangsrichtung, hier im Uhrzeigersinn, mitnimmt und so einem später noch zu erläuternden Schusskanal 12 zuführt.

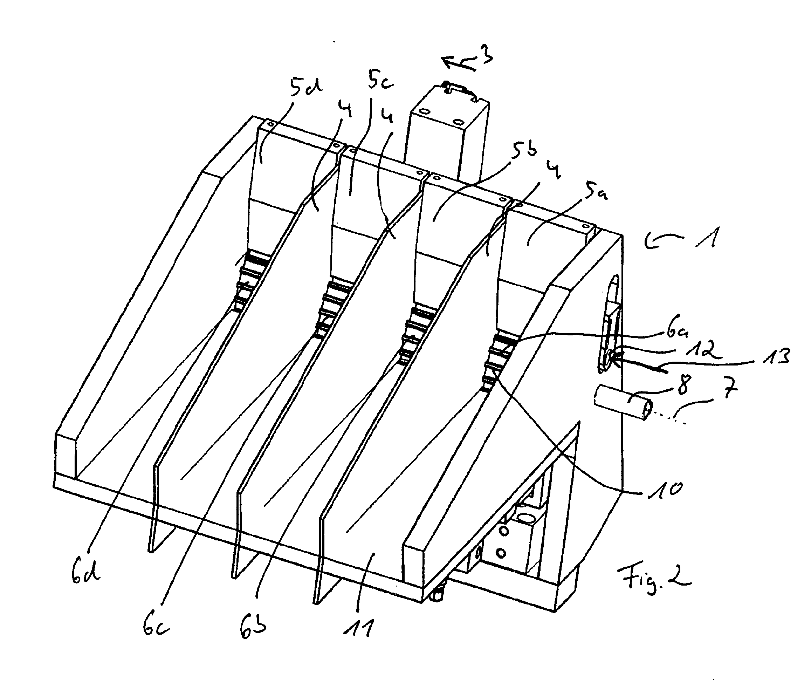

Dem vorerwähnten Schusskanal 12 sind in Fig. 2 lediglich als Pfeil angedeutete Impulsgebermittel 13 zugeordnet, mit denen der jeweils im Schusskanal 12 befindliche Ausbrechstift in die Axialrichtung 3 hin zu einem in Fig. 4 gezeigten Einsetzkopf 14 beschleunigbar ist. Bevorzugt handelt es sich um pneumatische Impulsgebermittel 13, die zum Erzeugen eines Luftdruckimpulses ausgebildet sind, um den Ausbrechstift zu beschleunigen. Auch ist es denkbar, mechanisch, beispielsweise mittels eines Stößels arbeitende Impulsgebermittel vorzusehen oder Impulsgebermittel, die den Ausbrechstift mittels eines Magnetfeldes beschleunigen. Wesentlich ist, dass die Impulsgebermittel 13 den Ausbrechstift derart beschleunigen können, dass dieser durch den Schusskanal 12 hin zum Einsetzkopf der Vorrichtung 2 bewegt wird. Der Schusskanal 12, der innerhalb des Ausbrechstiftmagazins 1 starr ist, ist in einem Teilabschnitt 15 (vgl. Fig.4) flexibel, sodass der Einsetzkopf 14, zu dem der Schusskanal 12 führt, relativ zu dem vorzugsweise stationären Ausbrechstiftmagazin 1 in einem Koordinatensystem definiert oberhalb eines zu bestückenden Ausbrechwerkzeuges 16 verstellbar ist.

Aus Fig. 1 ist ersichtlich, dass die Transporteinheiten 6a bis 6d jeweils einen Axialabschnitt des Schusskanals 12 bilden und zwar mittels jeweils einer Axialnut 10, wobei die jeweils einen Axialabschnitt des Schusskanals 12 bildenden Axialnuten 10 in axialer Richtung fluchten. In dem gezeigten Ausführungsbeispiel befindet sich der parallel zur Drehachse 7 verlaufende Schusskanal 12 in vertikaler Richtung versetzt zur Drehachse 7 der Ritzel 9a bis 9d. Die einen Axialabschnitt bildenden Axialnuten 10 der Transporteinheiten 6a bis 6d bzw. der Ritzel 9a bis 9d bilden in dem gezeigten Ausführungsbeispiel keinen umfangsgeschlossenen, röhrenförmigen Axialabschnitt, sondern bilden einen solchen umfangsgeschlossenen Röhrenabschnitt mit einem statischen Axialabschnitt 17, der sich lediglich über einen Umfangsabschnitt des Schusskanals 12 erstreckt. Der restliche Umfangsabschnitt, hier die untere Hälfte wird jeweils gebildet von einer Axialnut 10 jeder Transporteinheit 6a bis 6d.

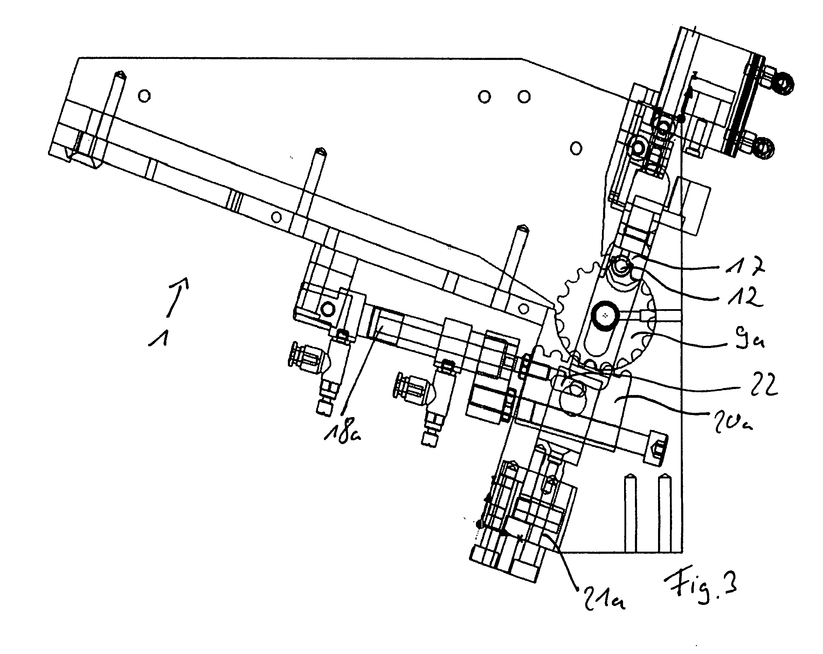

Zum unabhängigen voneinander rotieren der Transporteinheiten 6a bis 6d ist jeder Transporteinheit 6a bis 6d, genauer jedem Ritzel 9a bis 9d, ein, hier pneumatischer Linearantrieb 18a bis 18d zugeordnet, wobei sich die Linearantriebe 18a bis 18d bevorzugt in einer Ebene befinden, die sich unterhalb der Bodenfläche 11 der Vorratskammern 5a bis 5d befindet. Die Linearantriebe 18a bis 18d sind im Bereich ihres in der Zeichnungsebene linken Endes mit jeweils einem Schwenklager 19 verschwenkbar gelagert, derart, dass das in der Zeichnungsebene rechte Ende der Linearantriebe 18a bis 18d, welches Eingriffsmittel 20a bis 20d zum Zusammenwirken mit der zugehörigen Transporteinheit 6a bis 6d trägt, zwischen einer oberen Eingriffsposition, in der die in dem gezeigten Ausführungsbeispiel als Zahnstange ausgebildeten Eingriffsmittel 20a bis 20d mit dem zugehörigen Ritzel 9a bis 9d in Eingriff sind, um dieses rotatorisch durch translatorisches Verstellen anzutreiben und einer untere Parkposition verstellbar, hier verschwenkbar sind. Zum Verstellen der Linearantriebe 18a bis 18d, genauer zum Verschwenken derselben zwischen der Parkposition und der Eingriffsposition sind unterhalb der Eingriffsmittel 20a bis 20d angeordnete, hier pneumatische Verstellmittel 21a bis 21d vorgesehen. Bei diesen Verstellmitteln 21a bis 21d handelt es sich ebenfalls um Linearantriebe bzw. in dem konkreten Ausführungsbeispiel wie bei den Linearantrieben 18a bis 18d jeweils um Kolbenzylindereinheiten. Die Verstellantriebe 21a bis 21d sind gelenkig, hier durch Vorsehen jeweils eines Langlochs 22 (vgl. Fig. 3) in den Eingriffsmitteln 20a bis 20d mit den Linearantrieben 18a bis 18d verbunden.

Den Transporteinheiten 6a bis 6d, genauer den Linearantrieben 18a bis 18d ist eine nicht dargestellte Steuerung zugeordnet, die dafür Sorge trägt, dass im Betrieb der Vorrichtung 2 die gewünschte Transporteinheit 6a bis 6d rotiert wird um den gewünschten Ausbrechstift aus der zugehörigen Vorratskammer 5a bis 5d in den von den Transporteinheiten 6a bis 6d mitgebildeten Schusskanal 12 zu transportieren. Die Steuerung ist zudem derart ausgebildet, dass sie ein gleichzeitiges Verdrehen mehrerer Transporteinheiten 6a bis 6d im Normalbetrieb verhindert, um zu vermeiden, dass gleichzeitig mehr als ein Ausbrechstift in den Schusskanal 12 befördert wird.

Um einen Ausbrechstift aus einer der Vorratskammern 5a bis 5d in den Schusskanal 12 zuzuführen, muss der zugehörige Linearantrieb, beispielsweise der Linearantrieb 18a in die in Fig. 3 dargestellte Position angehoben bzw. verschwenkt werden, in der die zugehörigen Eingriffsmittel 20a mit dem entsprechenden Ritzel 9a in Eingriff sind. Nun kann der eine Kolbenzylindereinheit umfassende Linearantrieb 18a bis 18d linear verstellt werden, in dem gezeigten Ausführungsbeispiel in der Zeichenebene nach links, sodass das Ritzel 9a im Uhrzeigersinn um eine Stellung weiter verstellt wird, sodass die in der zunächst in Umfangsrichtung vor dem Schusskanal 12 liegende Axialnut 10 mit dem darin aufgenommenen Ausbrechstift in den Schusskanal 12 hineintransportiert wird bzw. diesen bildet und diese Axialnut 10 dann bzw. die die Axialnut begrenzenden Umfangswände mit dem statischen Axialabschnitt 17 mehr oder weniger dichtend zur Bildung des Schusskanals 12 zusammenwirken, woraufhin mittels der Impulsgebermittel 13 der Ausbrechstift, in diesem Fall durch die weiteren drei den Schusskanal 12 mitbildenden Axialnuten der axial benachbarten Ritzel 9b bis 9d in Richtung Einsetzkopf 14 beschleunigt wird, wo er bevorzugt mit einem nicht dargestellten Stößel kraftbeaufschlagt wird, um den Ausbrechstift an die gewünschte Position in das plattenförmige Ausbrechwerkzeug 16 einbringen zu können.

Nachdem der Ausbrechstift in den Schusskanal 12 verbracht wurde kann der Linearantrieb 18a wieder mit dem zughörigen Verstellmittel 21 a in der Zeichnungsebene nach unten transportiert werden, wobei bevorzugt während dieses Transportes oder in der unteren Parkposition oder erst beim erneuten Verstellen in die obere Eingriffsposition der Linearantrieb 18a in der Zeichnungsebene nach rechts linear verstellt wird, um beim nächsten Einsatz wieder durch das Verstellen nach in der Zeichnungsebene links das Ritzel 9a erneut um eine Winkelstellung im Uhrzeigersinn antreiben zu können.

In Fig. 4 ist stark vereinfacht die Vorrichtung 2 zum Einsetzen von Ausbrechstiften in das Ausbrechwerkzeug 16 gezeigt. Diese umfasst den oberhalb des Ausbrechwerkzeugs 16 verstellbaren Einsetzkopf 14, der bevorzugt Kraftbeaufschlagungsmittel zum mechanischen Beaufschlagen des in ihm befindlichen Ausbrechstiftes aufweist. Die Ausbrechstifte gelangen nacheinander über den in einem Teilabschnitt flexiblen Schusskanals 12 aus dem Ausbrechstiftmagazin 1 in den Einsetzkopf 14.

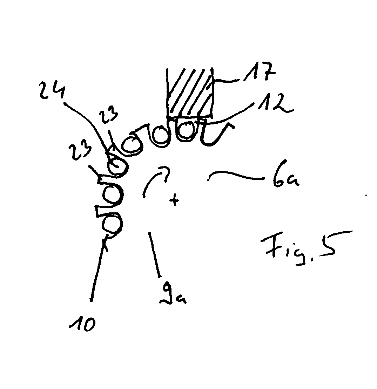

In Fig. 5 ist eine alternativ aufgebaute Transporteinheit 6a gezeigt. Diese umfasst ein Ritzel 9a, welches sich von den im Zusammenhang mit den Fig. 1 bis 3 beschriebenen Ritzeln dadurch unterscheidet, dass die Axialnuten 10 in radialer Richtung tiefer ausgebildet sind. Anders ausgedrückt überragt ein in einer Axialnut 10 aufgenommener Ausbrechstift die jeweilige Axialnut 10 nicht wie bei den vorhergehenden Ausführungsbeispielen in radialer Richtung, sondern jeder Ausbrechstift ist vollständig in der Axialnut 10 aufgenommen. Die Axialnuten 10 sind im Querschnitt U-förmig ausgebildet und die jeweils eine Axialnut 10 in die Umfangsrichtungen begrenzenden Nutwände 23 überragen den aufgenommenen Ausbrechstift 24 in radialer Richtung. Bei einer derartigen Ausführung des Ritzels 9a ist es möglich, den von einer Axialnut 10 mitgebildeten Schusskanal mit einem statischen, d.h. nicht bewegbar angeordneten Axialabschnitt 17 abzudichten, welcher in dem den Schusskanal 12 begrenzenden Bereich eben, d.h. nicht gekrümmt ausgebildet ist.

### Bezugszeichenliste

- 1: Ausbrechstiftmagazin
- 2: Vorrichtung
- 3: Axialrichtung
- 4: Zwischenwand
- 5a, 5b, 5c, 5d: Vorratskammer
- 6a, 6b, 6c, 6c: Transporteinheit
- 7: Drehachse
- 8: Achse
- 9a, 9b, 9c, 9d: Ritzel
- 10: Axialnut
- 11: Bodenfläche
- 12: Schusskanal
- 13: Impulsgebermittel
- 14: Einsetzkopf
- 15: Teilabschnitt
- 16: Ausbrechwerkzeug
- 17: Axialabschnitt
- 18a, 18b, 18c, 18d: Linearantrieb
- 19: Schwenklager
- 20a, 20b, 20c, 20d: Eingriffsmittel
- 21a, 21b, 21c, 21d: Verstellmittel
- 22: Langloch
- 23: Nutwand
- 24: Ausbrechstift

## Patentansprüche

1. Ausbrechstiftmagazin (1) zum Zuführen von Ausbrechstiften zu einem Einsetzkopf (14), mit einer ersten Vorratskammer (5a) für erste Ausbrechstifte und mit mindestens einer zweiten Vorratskammer (5b) für zweite Ausbrechstifte, wobei der ersten Vorratskammer (5a) eine erste rotierbare Transporteinheit (6a) und der zweiten Vorratskammer (5b) eine unabhängig von der ersten Transporteinheit (6a) rotierbare und zur ersten Transporteinheit (6a) axial benachbarte zweite Transporteinheit (6b) zugeordnet ist, mit denen Ausbrechstifte aus der jeweiligen Vorratskammer (5a bis 5d) einzeln einem gemeinsamen Schusskanal (12) zuführbar sind, dem, insbesondere pneumatische, Impulsgebermittel (13) zum Beaufschlagen des jeweils im Schusskanal (12) befindlichen Ausbrechstiftes mit einem Beschleunigungsimpuls zum Beschleunigen des Ausbrechstiftes in Richtung auf den Einsetzkopf (14) zugeordnet sind.

2. Ausbrechstiftmagazin nach Anspruch 1,
**dadurch gekennzeichnet,**
**dass** die Transporteinheiten (6a bis 6d) jeweils einen Axialabschnitt (17) des Schusskanals (12) bilden.

3. Ausbrechstiftmagazin nach einem der Ansprüche 1 oder 2,
**dadurch gekennzeichnet,**
**dass** die Transporteinheiten (6a bis 6d) jeweils ein mehrere in Umfangsrichtung nebeneinander angeordnete Axialnuten (10) aufweisendes Ritzel (9a bis 9d) umfassen, und dass die axial hintereinander angeordneten Ritzel (9a bis 9d) um eine gemeinsame gedachte Drehachse (7) rotierbar sind.

4. Ausbrechstiftmagazin nach einem der vorhergehenden Ansprüche,
**dadurch gekennzeichnet,**
**dass** der ersten Transporteinheit (6a) ein erster, vorzugsweise pneumatischer, Linearantrieb (18a) und der zweiten Transporteinheit (6b) ein, vorzugsweise pneumatischer, zweiter Linearantrieb (18b) zugeordnet sind.

5. Ausbrechstiftmagazin nach Anspruch 4,
**dadurch gekennzeichnet,**
**dass** die Linearantriebe (18a bis 18d) jeweils aus einer Parkposition in eine Eingriffsposition, insbesondere pneumatisch, verstellbar, vorzugsweise verschwenkbar, sind, in der die Linearantriebe (18a bis 18d) über, insbesondere eine Zahnstange umfassende, Eingriffsmittel (20a bis 20d) mit der zugehörigen Transporteinheit zusammenwirken.

6. Ausbrechstiftmagazin nach einem der vorhergehenden Ansprüche,
**dadurch gekennzeichnet,**
**dass** die axial benachbart angeordneten Vorratskammern (5a bis 5d) jeweils eine in Richtung Transporteinheit (6a bis 6d) geneigte Bodenfläche (11) aufweisen.

7. Ausbrechstiftmagazin nach einem der vorhergehenden Ansprüche,
**dadurch gekennzeichnet,**
**dass** in der ersten Vorratskammer (5a) erste Ausbrechstifte und in der zweiten Vorratskammer (5b) zweite Ausbrechstifte aufgenommen sind und dass die ersten und zweiten Ausbrechstifte identisch oder unterschiedlich sind.

8. Verwendung eines Magazins nach einem der vorhergehenden Ansprüche zum Zuführen von Ausbrechstiften zu einem Einsetzkopf (14).

9. Vorrichtung (2) zum aufeinanderfolgenden Einsetzen einer Mehrzahl von Ausbrechstiften in ein plattenförmiges Ausbrechwerkzeug (16) mit einem zum Einpressen eines Ausbrechstiftes durch Kraftbeaufschlagung ausgebildeten Einsetzkopf (14), der über einen abschnittsweise flexiblen Schusskanal (12) mit einem Ausbrechstiftmagazin (1) nach einem der Ansprüche 1 bis 6 verbunden ist.

10. Vorrichtung nach Anspruch 9,
**dadurch gekennzeichnet,**
**dass** mehrere Ausbrechstiftmagazine (1) modulartig axial nebeneinander angeordnet sind und dass den Ausbrechstiftmagazinen (1) gemeinsame Impulsgebermittel (13) zugeordnet sind.

## Claims

1. Stripping pin magazine (1) for feeding stripping pins to an insertion head (14), comprising a first storage chamber (5a) for first stripping pins and comprising at least a second storage chamber (5b) for second stripping pins, wherein a first rotatable transport unit (6a) is allocated to the first storage chamber (5a) and a second transport unit (6b) which is rotatable independently of the first transport unit (6a) and axially adjacent to the first transport unit (6a) is allocated to the second storage chamber (5b), by means of which transport units stripping pins from the respective storage chambers (5a to 5d) can be fed individually to a common shot channel (12), to which pulse generating means (13), in particular pneumatic pulse generating means, are allocated for applying to the stripping pin located in the shot channel (12) an acceleration pulse for accelerating the stripping pin in the direction of the insertion head (14).

2. Stripping pin magazine according to claim 1, **characterised in that** the transport units (6a to 6d) each form an axial portion (17) of the shot channel (12).

3. Stripping pin magazine according to either claim 1 or claim 2, **characterised in that** the transport units (6a to 6d) each comprise a pinion (9a to 9d) comprising a plurality of axial grooves (10) arranged side by side in the peripheral direction, and **in that** the pinions (9a to 9d) arranged axially in succession are rotatable about a common imaginary axis of rotation (7).

4. Stripping pin magazine according to any of the preceding claims, **characterised in that** a first, preferably pneumatic, linear drive (18a) is allocated to the first transport unit (6a) and a preferably pneumatic second linear drive (18b) is allocated to the second transport unit (6b).

5. Stripping pin magazine according to claim 4, **characterised in that** the linear drives (18a to 18d) can each be moved, preferably pivoted, in particular pneumatically, from a stand-by position into an engagement position in which the linear drives (18a to 18d) interact with the associated transport unit via engagement means (20a to 20d), in particular comprising a toothed rack.

6. Stripping pin magazine according to any of the preceding claims, **characterised in that** the axially adjacent storage chambers (5a to 5d) each comprise a base surface (11) which is inclined in the direction of the transport unit (6a to 6d).

7. Stripping pin magazine according to any of the preceding claims, **characterised in that** first stripping pins are accommodated in the first storage chamber (5a) and second stripping pins are accommodated in the second storage chamber (5b) and **in that** the first and second stripping pins are identical or different.

8. Use of a magazine according to any of the preceding claims for feeding stripping pins to an insertion head (14).

9. Device (2) for successively inserting a plurality of stripping pins into a plate-shaped stripping tool (16) comprising an insertion head (14) which is designed to inject a stripping pin by application of force and is connected to a stripping pin magazine (1) according to any of claims 1 to 6 via a shot channel (12) which is flexible in portions.

10. Device according to claim 9, **characterised in that** a plurality of stripping pins (1) are arranged axially side by side in a modular manner and **in that** common pulse generating means (13) are allocated to the stripping pin magazines (1).

## Revendications

1. Magasin de broches de sectionnement (1) pour l'alimentation de broches de sectionnement à une tête d'insertion (14), comprenant une première chambre de stockage (5a) pour des premières broches de sectionnement et au moins une deuxième chambre de stockage (5b) pour des deuxièmes broches de sectionnement, la première chambre de stockage (5a) étant associée à une première unité de transport rotative (6a) et la deuxième chambre de stockage (5b) étant associée à une deuxième unité de transport (6b) pouvant tourner indépendamment de la première unité de transport (6a) et axialement adjacente à la première unité de transport (6a), avec lesquelles des broches de sectionnement peuvent être acheminées depuis la chambre de stockage respective (5a à 5d) individuellement à un canal d'éjection commun (12), auquel sont associés des moyens générateurs d'impulsion (13), en particulier pneumatiques, pour solliciter la broche de sectionnement respective se trouvant dans le canal d'éjection (12) avec une impulsion d'accélération pour accélérer la broche de sectionnement dans la direction de la tête d'insertion (14).

2. Magasin de broches de sectionnement selon la revendication 1,
**caractérisé en ce que** les unités de transport (6a à 6d) forment chacune une portion axiale (17) du canal d'éjection (12).

3. Magasin de broches de sectionnement selon l'une quelconque des revendications 1 ou 2,
**caractérisé en ce que**
les unités de transport (6a à 6d) comprennent chacune un pignon (9a à 9d) présentant plusieurs rainures axiales (10) disposées les unes à côté des autres dans la direction périphérique, et **en ce que** les pignons (9à à 9d) disposés axialement les uns derrière les autres peuvent tourner autour d'un axe de rotation imaginaire commun (7).

4. Magasin de broches de sectionnement selon l'une quelconque des revendications précédentes,
**caractérisé en ce que**
la première unité de transport (6a) est associée à un premier entraînement linéaire (18a), de préférence pneumatique, et la deuxième unité de transport (6b) est associée à un deuxième entraînement linéaire (18b), de préférence pneumatique.

5. Magasin de broches de sectionnement selon la revendication 4,
**caractérisé en ce que**
les entraînements linéaires (18a à 18d) peuvent être réglés, de préférence pivotés, en particulier pneumatiquement, d'une position de stationnement dans une position d'engagement dans laquelle les entraînements linéaires (18a à 18d) coopèrent avec l'unité de transport associée par le biais de moyens d'engagement (20a à 20d) comprenant notamment une crémaillère.

6. Magasin de broches de sectionnement selon l'une quelconque des revendications précédentes,
**caractérisé en ce que**
les chambres de stockage disposées axialement les unes à côté des autres (5à à 5d) présentent chacune une surface de fond (11) inclinée dans la direction de l'unité de transport (6a à 6d).

7. Magasin de broches de sectionnement selon l'une quelconque des revendications précédentes,
**caractérisé en ce que**
dans la première chambre de stockage (5a) sont reçues des premières broches de sectionnement et dans la deuxième chambre de stockage (5b) sont reçues des deuxièmes broches de sectionnement et **en ce que** les premières et deuxièmes broches de sectionnement sont identiques ou différentes.

8. Utilisation d'un magasin selon l'une quelconque des revendications précédentes pour l'alimentation de broches de sectionnement à une tête d'insertion (14).

9. Dispositif (2) pour l'insertion successive d'une pluralité de broches de sectionnement dans un outil de sectionnement en forme de plaques (16) avec une tête d'insertion (14) réalisé de manière à enfoncer une broche de sectionnement par sollicitation par force, laquelle tête d'insertion est connectée par le biais d'un canal d'éjection (12) en partie flexible à un magasin de broches de sectionnement (1) selon l'une quelconque des revendications 1 à 6.

10. Dispositif selon la revendication 9,
**caractérisé en ce que**
plusieurs magasins de broches de sectionnement (1) sont disposés les uns à côté des autres axialement sous forme modulaire et **en ce que** les magasins de broches de sectionnement (1) sont associés à des moyens générateurs d'impulsion communs (13).
